# EUROPÄISCHE PATENTSCHRIFT

(11) **EP 2 379 379 B1**
(45) Veröffentlichungstag und Bekanntmachung des Hinweises auf die Patenterteilung: **27.02.2013**
(21) Anmeldenummer: 09755890.2
(22) Anmeldetag: 16.11.2009
(51) Int. Cl.: B60T 7/04, B60T 13/02, B60T 13/12, B60T 13/74

(54) **BREMSANLAGE FÜR EIN KRAFTFAHRZEUG UND VERFAHREN ZU IHRER STEUERUNG**
BRAKING SYSTEM FOR A MOTOR VEHICLE AND METHOD FOR CONTROLLING IT
INSTALLATION DE FREINAGE POUR VÉHICULE AUTOMOBILE ET PROCÉDÉ POUR SA COMMANDE

(30) Priorität: 16.06.2009 DE 102009026973; 18.12.2008 DE 102008054849
(43) Veröffentlichungstag der Anmeldung: 26.10.2011
(73) Patentinhaber: Robert Bosch GmbH, 70442 Stuttgart (DE)
(72) Erfinder: VOLLERT, Herbert, 71665 Vaihingen/Enz (DE); WEIBERLE, Reinhard, 71665 Vaihingen/Enz (DE)
(86) Internationale Anmeldenummer: PCT/EP2009/065199
(87) Internationale Veröffentlichungsnummer: WO 2010/069689

(56) Entgegenhaltungen:
- WO-A1-2007/080106
- DE-A1- 10 319 663
- US-A1- 2003 168 909

## Beschreibung

### Stand der Technik

Die Erfindung betrifft eine Bremsanlage für ein Kraftfahrzeug mit den Merkmalen des Oberbegriffs des Anspruchs 1 sowie ein Verfahren zu ihrer Steuerung mit den Merkmalen des Oberbegriffs des Anspruchs 5.

Die Erfindung ist für eine sog. Hybrid-Fahrzeugbremsanlage vorgesehen, womit eine Bremsanlage gemeint ist, die ein hydraulisches Betriebsbremssystem und ein weiteres, beispielsweise elektromechanisches Betriebsbremssystem aufweist. Es wirkt beispielsweise das hydraulische Betriebsbremssystem auf die Räder einer Vorderachse eines Kraftwagens und das weitere Betriebsbremssystem auf die Räder einer Hinterachse. Das hydraulische Betriebsbremssystem weist einen muskelkraftbetätigbaren Hauptbremszylinder mit einem Bremskraftverstärker und eine oder mehrere hydraulische Radbremsen, die an den Hauptbremszylinder angeschlossen sind, auf. Ist das weitere Betriebsbremssystem ein elektromechanisches, weist es eine oder mehrere elektroechanische Radbremsen auf. Eine derartige Hybrid-Bremsanlage offenbart die Offenlegungsschrift DE 103 19 663 A1.

### Offenbarung der Erfindung

Die erfindungsgemäße Bremsanlage mit den Merkmalen des Anspruchs 1 weist einen Bremskraftverstärker auf, der nicht nur die Betätigungskraft, d.h. die zu einer Bremsbetätigung auf den Hauptbremszylinder ausgeübte Muskelkraft, verstärkt, sondern der auch eine Kraft erzeugen kann, die der von einem Fahrzeugführer auf den Hauptbremszylinder ausgeübten Betätigungskraft entgegengerichtet ist. Die vom Bremskraftverstärker erzeugte, der Betätigungskraft entgegengerichtete Kraft wird hier als Pedalkraft bezeichnet, die beispielsweise auf ein (Fuß-) Bremspedal oder einen (Hand-) Bremshebel wirkt. Mit der Erfindung ist es auch dann möglich eine Pedalkraft zu bewirken, wenn, beispielsweise infolge einer Leckage kein Bremsdruck mit dem Hauptbremszylinder im hydraulischen Betriebsbremssystem aufgebaut werden kann. Wenn aufgrund eines Fehlers im hydraulischen Bremssystem ein zu niedriger Druck aufgebaut wird, kann die Pedalkraft mit dem Bremskraftverstärker erhöht werden. Der Bremskraftverstärker der erfindungsgemäßen Bremsanlage bildet zugleich eine Pedalsimulator zum Erzeugen oder Erhöhen einer Pedalkraft, die ein Fahrzeugführer zu einer Bremsbetätigung mit Muskelkraft aufbringen muss. Durch die Möglichkeit, eine Pedalkraft mit dem Bremskraftverstärker zu erzeugen ermöglicht die Erfindung eine dosierte Bremsbetätigung bei Ausfall oder Störung des hydraulischen Betriebsbremssystems. Das weitere Betriebsbremssystem sollte eine ausreichende Hilfsbremswirkung bei Ausfall des hydraulischen Betriebsbremssystems bereitstellen, was allerdings aus technischer Sicht kein zwingendes Erfordernis für die Erfindung ist, sondern eine rechtliche Voraussetzung für die Zulassung zum Straßenverkehr. Hilfsbremsung bedeutet in diesem Fall eine Bremsung des Kraftfahrzeugs mit dem weiteren Betriebsbremssystem bei Ausfall des hydraulischen Betriebsbremssystems. Ein Vorteil der Erfindung ist die Möglichkeit, das hydraulische Betriebsbremssysteme als Einkreis-Bremssystem auszuführen, weil eine Hilfsbremsung wie gesagt mit dem weiteren Betriebsbremssystem möglich ist. Ein Einkreis-Bremssystem ist einfacher und kostengünstiger als ein Zweikreis-Bremssystem.

Die Unteransprüche haben vorteilhafte Ausgestaltungen und Weiterbildungen der im Anspruch 1 angegebenen Erfindung zum Gegenstand.

Das weitere Betriebsbremssystem kann ebenfalls ein hydraulisches Betriebsbremssystem sein. Vorzugsweise ist es jedoch kein hydraulisches Betriebsbremssystem, jedenfalls kein ausschließlich hydraulisches Betriebsbremssystem, sondern beispielsweise ein elektrohydraulisches-, pneumatisches- oder elektropneumatisches Betriebsbremssystem. Insbesondere ist ein elektromechanisches Betriebsbremssystem als weiteres Betriebsbremssystem vorgesehen, das eine oder mehrere elektromechanische Radbremsen aufweist (Anspruch 2). Elektromechanische Radbremsen sind bekannt, sie weisen beispielsweise einen Elektromotor auf, mit dem über ein Rotations- /Translations-Umsetzungsgetriebe ein Reibbremsbelag gegen einen Bremskörper, beispielsweise eine Bremsscheibe oder eine Bremstrommel, drückbar ist. Dem Rotations-/Translations-Umsetzungsgetriebe und dem Elektromotor kann ein Untersetzungsgetriebe zwischengeschaltet sein. Das Rotations-/Translations-Umsetzungsgetriebe kann beispielsweise einen Spindeltrieb oder auch einfach nur einen Nocken aufweisen.

Anspruch 3 sieht eine selbstverstärkende elektromechanische Radbremse vor. Auch hier sind verschiedene Bauformen bekannt. Beispielsweise eine Trommelbremse mit einer elektromechanischen Betätigung und einer oder zwei auflaufenden Bremsbacken ist eine selbstverstärkende elektromechanische Radbremse. Für Scheibenbremsen sind Selbstverstärkungseinrichtungen beispielsweise mit einem Keilmechanismus bekannt, die einen Reibbremsbelag in Drehrichtung einer Bremsscheibe mit einem Keil abstützen. Die drehende Bremsscheibe beaufschlagt den bei betätigter Bremse gegen sie gedrückten Reibbremsbelag in einen enger werdenden Keilspalt, der gemäß dem Keilprinzip die Spannkraft der Scheibenbremse erhöht. Beispielhaft für eine selbstverstärkende elektromechanische Scheibenbremse mit einem Keilmechanismus zur Selbstverstärkung wird hingewiesen auf die Offenlegungsschrift DE 100 56 451 A1. Die Aufzählung selbstverstärkender Bremsen ist nicht abschließend.

Als Bremskraftverstärker ist beispielsweise ein modifizierter Unterdruck-Bremskraftverstärker möglich, dessen Unterdruckkammer beispielsweise mit einem Magnetventil belüftbar ist. Die Unterdruckkammer befindet sich auf einer dem Hauptbremszylinder zugewandten Seite einer Arbeitsmembran des Bremskraftverstärkers, sie wird normalerweise nicht belüftet. Wird die Unterdruckkammer anstatt wie zu einer Bremskraftverstärkung die Arbeitskammer belüftet, wirkt der Bremskraftverstärker in einer der Bremsbetätigung entgegengesetzten Richtung. Auf diese Weise lässt sich die gewünschte Pedalkraft erzeugen. Anspruch 4 sieht einen elektromechanischen Bremskraftverstärker vor, dessen Kraft bauartbedingt elektrisch oder elektronisch steuerbar ist. Als Beispiel eines elektromechanischen Bremskraftverstärkers wird auf die Offenlegungsschrift DE 100 57 557 A1 verwiesen, der eine Kraft mit einem Elektromagneten oder einem Linearmotor elektromechanisch erzeugt. Die Kraft des Bremskraftverstärkers addiert sich zu einer von einem Fahrzeugführer zur Bremsbetätigung ausgeübten Muskel- und Betätigungskraft. Eine andere Ausgestaltung eines elektromechanischen Bremskraftverstärkers beispielsweise mit einem Elektromotor, der eine Kraft über ein Getriebe ausübt, ist ebenfalls möglich. Der Bremskraftverstärker muss allerdings so ausgebildet sein, dass eine Krafterzeugung in einer der Betätigungsrichtung entgegengesetzten Richtung möglich ist.

Gegenstand des Anspruchs 5 ist ein Verfahren zur Steuerung einer Hybrid-Bremsanlage, wie sie vorstehend erläutert worden ist. Das Wort "Steuerung" wird hier auch im Sinne einer Regelung gebraucht. Das Verfahren sieht vor, den Bremskraftverstärker in seiner Funktion als Pedalsimulator zu verwenden und eine Pedalkraft zu erzeugen, wenn bei Betätigung der Bremsanlage der Hauptbremszylinder keinen oder jedenfalls nicht den üblichen Bremsdruck erzeugt. Ein Fahrzeugführer spürt bei einer Betätigung der Bremsanlage eine Gegenkraft, auch wenn diese nicht oder nur zum Teil durch einen vom Hauptbremszylinder erzeugten Bremsdruck verursacht ist. Dies ermöglicht eine dosierte Bremsbetätigung bei Ausfall des hydraulischen Betriebsbremssystems mit dem weiteren Betriebsbremssystem. Zur Steuerung sieht Anspruch 5 eine Betätigungssensorik vor, mit der eine Bremsbetätigung messbar ist. Dabei kann es sich um einen Pedalwegsensor und eine Pedalkraftsensor oder einen Drucksensor handeln, mit denen die Pedalkraft oder der Bremsdruck in Abhängigkeit von einem Pedalweg messbar und mit den üblichen Werten bei funktionierender Bremsanlage verglichen werden.

Es kann bei Ausfall des hydraulischen Betriebsbremssystems bewusst eine von der üblichen Betätigungskraft abweichende Pedalkraft mit dem Bremskraftverstärker erzeugt werden, damit ein Fahrzeugführer spürt, dass die Bremsanlage nicht in Ordnung ist und er trotzdem durch die Pedalkraft dosiert bremsen kann. Anspruch 6 sieht stattdessen die Erzeugung einer der üblichen Betätigungskraft entsprechenden Pedalkraft bei einem gegebenen Betätigungsweg vor. Der Fehler des hydraulischen Betriebsbremssystems ist dabei für ein Fahrzeugführer nicht spürbar und sollte deswegen durch beispielsweise optische und/oder akustische Anzeige mitgeteilt werden.

### Kurze Beschreibung der Zeichnung

Die Erfindung wird nachfolgend anhand einer in der Zeichnung dargestellten Ausführungsform näher erläutert. Es zeigen:
- Figur 1: eine schematische Darstellung einer Bremsanlage für ein Kraftfahrzeug gemäß der Erfindung; und
- Figur 2: einen schematisierten Achsschnitt eines Bremskraftverstärkers der Bremsanlage aus Figur 1.

### Ausführungsform der Erfindung

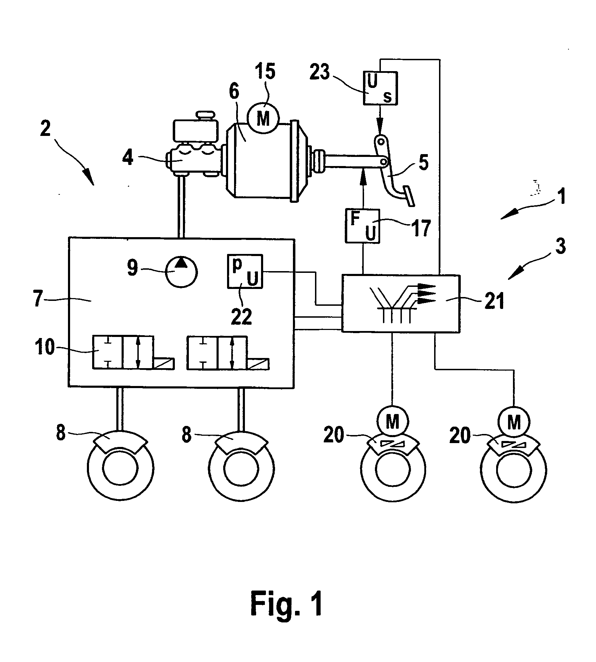

Die in Figur 1 dargestellte, erfindungsgemäße Bremsanlage 1 für einen Kraftwagen umfasst ein hydraulisches Betriebsbremssystem 2 und ein elektromechanisches Betriebsbremssystem 3. Das hydraulische Betriebsbremssystem 2 dient beispielsweise zum Bremsen der Räder einer Vorderachse und das elektromechanische Betriebsbremssystem 3 zum Bremsen der Räder einer Hinterachse. Das hydraulische Betriebsbremssystem 2 umfasst einen Hauptbremszylinder 4, der mit Muskelkraft mit einem Bremspedal 5 betätigbar ist. Der Hauptbremszylinder 4 weist einen elektromechanischen Bremskraftverstärker 6 auf. An den Hauptbremszylinder 4 sind über ein Hydroaggregat 7 hydraulische Radbremsen 8 angeschlossen. Das Hydroaggregat 7 enthält u. a. eine Hydropumpe 9, die vielfach auch als Rückförderpumpe bezeichnet wird, sowie Magnetventile 10 zu einer radindividuellen Regelung eines Radbremsdrucks und damit zu einer radindividuellen Bremskraftsteuerung. Solche Hydroaggregate 7 sind als Schlupfregeleinrichtungen zu einer Blockierschutzregelung, Antriebsschlupfregelung und/oder Fahrdynamikregelung bekannt, für diese Regelungen sind die Abkürzungen ABS, ASR, FDR und ESP bekannt. Das Hydroaggregat 7 ist für die Erfindung nicht erforderlich.

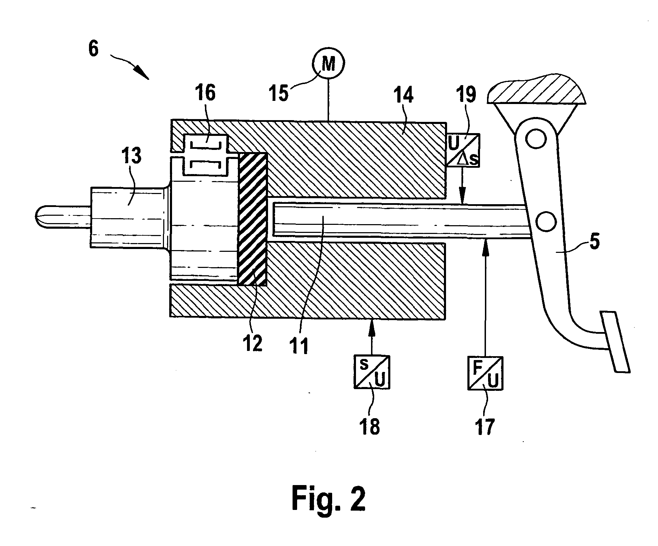

Figur 2 zeigt eine Ausführungsform des elektromechanischen Bremskraftverstärkers 6 in einer vereinfachten, schematisierten Achsschnittdarstellung. Der Bremskraftverstärker 6 weist eine Kolbenstange 11 auf, die gelenkig mit dem Bremspedal 5 verbunden ist und mit der eine auf das Bremspedal 5 ausgeübte Muskelkraft über eine Reaktionsscheibe 12 auf eine Druckstange 13 übertragbar ist. Die Druckstange 13 beaufschlagt in üblicher Weise einen Kolben des in Figur 2 nicht dargestellten Hauptbremszylinders 4. Außerdem weist der Bremskraftverstärker 6 einen elektromechanischen Aktuator 14 auf, mit dem ebenfalls über die Reaktionsscheibe 12 eine vom Aktuator 14 erzeugte Aktuatorkraft auf die Druckstange 13 übertragbar ist. Symbolisch dargestellt zur Krafterzeugung ist ein Elektromotor 15, wobei es sich auch um einen Linearmotor handeln kann. Ebenfalls ist eine Aktuatorkrafterzeugung mit einem Elektromagneten möglich (nicht dargestellt). Die Reaktionsscheibe 12 ist ein gummielastischer Körper, der die Muskelkraft von der Pedalstange 11 und die vom Aktuator 14 erzeugte Aktuatorkraft als Druckkräfte auf die Druckstange 13 überträgt.

Der Bremskraftverstärker 6 ist so modifiziert, dass mit ihm eine der Betätigungsrichtung entgegengerichtete Kraft auf die Kolbenstange 11 und über diese auf das Bremspedal 5 ausgeübt werden kann. Diese Kraft wird nachfolgend als Pedalkraft bezeichnet. Zu diesem Zweck weist der Bremskraftverstärker 13 eine schaltbare Kupplung auf, beispielsweise eine Magnetkupplung 16. Mit der Magnetkupplung 16 ist der Aktuator 14 mit der Druckstange 11 verbindbar, so dass wie gesagt eine der Betätigungsrichtung entgegengerichtete, in Figur 2 also nach rechts wirkende Kraft vom Aktuator 14 über die Magnetkupplung 16, die Reaktionsscheibe 12 und die Kolbenstange 11 auf das Bremspedal 5 ausübbar ist. Mit dem Bremskraftverstärker 6 ist es möglich, auch bei drucklosem Hauptbremszylinder 4 eine Pedalkraft zu erzeugen, die einer von einem Fahrzeugführer auf das Bremspedal 5 ausgeübten Muskelkraft entgegenwirkt. Dadurch ist auch ohne Druck im Hauptbremszylinder 4 eine dosierte Betätigung des Bremspedals 5 möglich.

Die Magnetkupplung 16 bzw. Kupplung ist allgemein als ein Koppelelement zu verstehen, über das eine Aktuatorkraft des Aktuators 14, die einer Betätigungsrichtung des Hauptbremszylinders 4 entgegengerichtet ist, auf die Pedalstange 11 und das Bremspedal 5 übertragbar ist, wenn das Koppelelement, im Ausführungsbeispiel also die Magnetkupplung 16, den Aktuator 14 mit der Pedalstange 11 unmittelbar oder mittelbar über weitere Bauteile verbindet. Ein anderes denkbares Koppelelement wäre eine Kolben- und Zylindereinheit, die den Aktuator 14 mit der Kolbenstange 11 verbindet, wobei ein Flüssigkeitsvolumen im Zylinder beispielsweise mit einem Magnetventil einsperrbar ist, so dass die Kolben- und Zylindereinheit die Pedalstange 11 starr mit dem Aktuator 14 verbindet. Bei geöffnetem Ventil ist die Pedalstange 11 gegenüber dem Aktuator 14 verschiebbar.

Vorzugsweise ist die mit der Magnetkupplung 16 oder allgemein dem Koppelelement übertragbare Kraft begrenzt, so dass bei einer Muskelkraftbetätigung des Hauptbremszylinders 4 bei geschlossener Magnetkupplung 16 ein eventuell blockierter Aktuator 14 überdrückt werden kann. Zur Steuerung bzw. Regelung weist der Bremskraftverstärker 6 einen Kraftsensor 17, mit dem die auf das Bremspedal 5 ausgeübte Muskelkraft messbar ist, einen Wegsensor 18, der eine Bewegung des Aktuators 14 misst, und einen Lagesensor 19 auf, der eine Verschiebung der Kolbenstange 11 gegenüber dem Aktuator 14 misst.

Das elektromechanische Betriebsbremssystem 3 der Bremsanlage 1 weist elektromechanische Bremsen 20 auf. In der Ausführungsform sind selbstverstärkende elektromechanische Bremsen 20 gewählt worden, symbolisiert durch die Doppelkeile im Bremssattel. Selbstverstärkende Bremsen 20 sind nicht zwingend für die Erfindung. Selbstverstärkende elektromechanische Scheibenbremsen mit einer elektromechanischen Selbstverstärkung mittels eines Keilmechanismus sind bekannt. Es wird beispielhaft auf die Offenlegungsschrift DE 100 56 451 A1 verwiesen. Auch hydraulische Selbstverstärkungseinrichtungen sind bekannt. Des weiteren können Trommelbremsen, deren Bremsbacken elektromechanisch gespannt, d.h. zum Bremsen gegen eine Bremstrommel gedrückt werden, als Bremsen 20 Verwendung finden. Sie weisen durch eine oder zwei auflaufende Bremsbacken eine Selbstverstärkung auf.

Zur Steuerung bzw. Regelung der elektromechanischen Bremsen 20 ist ein elektronisches Steuergerät 21 vorhanden, das auch den Bremskraftverstärker 6 und die Komponenten des Hydraulikbocks 7 steuert bzw. regelt, d.h. die Schlupfregelung bewerkstelligt. Das elektronische Steuergerät 21 erhält Signale von den Sensoren 17, 18, 19 des Bremskraftverstärkers 6 und von einem Drucksensor 22, mit dem der Druck im Hauptbremszylinder 4 gemessen wird. In Figur 1 ist ein Pedalwegsensor 23 gezeichnet, der einen Weg des Bremspedals 5 bzw. der Kolbenstange 11 misst. Der Pedalwegsensor 23 kann an die Stelle des Wegsensors 18 und des Positionssensors 19 des Bremskraftverstärkers 6 treten. Die Sensoren 17, 18, 19, 22, 23 bilden eine Betätigungssensorik, mit der eine Bremsbetätigung messbar ist. Damit ist ein Pedalweg in Abhängigkeit von einer Pedalkraft gemeint, wobei anstelle der Pedalkraft auch der Druck im Hauptbremszylinder 4 messbar ist. Es wird also die sog. Pedalkennlinie gemessen. Die Sensoren sind teilweise redundant, es genügt der Drucksensor 22 oder der Kraftsensor 17 und der Pedalwegsensor 23 oder der Wegsensor 18 und der Positionssensor 19.

Das hydraulische Betriebsbremssystem 2 ist einkreisig ausgeführt, weil bei einem Ausfall eine Bremsung immer noch mit dem elektromechanischen Betriebsbremssystem 3 möglich ist. Wird bei einer Bremsbetätigung, also einem Niedertreten des Bremspedals 5, wegen eines Fehlers, beispielsweise einer Leckage im hydraulischen Betriebsbremssystem 2 kein Druck mit dem Hauptbremszylinder 4 aufgebaut, erfolgt die Bremsung wie gesagt mit dem elektromechanischen Betriebsbremssystem 3. Mit dem Bremskraftverstärker 6 wird eine der Betätigungsrichtung entgegengerichtete Pedalkraft erzeugt und auf das Bremspedal 5 ausgeübt, so dass ein Fahrzeugführer beim Niedertreten des Bremspedals 5 einen Widerstand spürt, wodurch ein Dosieren der Bremsbetätigung möglich oder jedenfalls besser ist als bei vollständig oder nahezu kraftfreiem Bremspedal 5. Wie bereits beschrieben wird die der Betätigungsrichtung entgegengerichtete Pedalkraft erzeugt, indem die Magnetkupplung 16 geschlossen und der Aktuator 14 so bestromt wird, dass die Aktuatorkraft der Betätigungsrichtung entgegengerichtet ist. Auch wenn der Druck im Hauptbremszylinder 4 bei einer Bremsbetätigung wegen eines Fehlers verringert ist, also niedriger als üblich, kann mit dem Bremskraftverstärker 6 die Pedalkraft in beschriebener Weise erhöht werden. Mit der Erfindung ist die übliche Pedalkennlinie, also die vom Pedalweg abhängige übliche Pedalkraft möglich unabhängig von einem Druckaufbau mit dem Hauptbremszylinder 4. Auch kann im Fehlerfall eine spürbar von der üblichen Pedalkraft abweichende Pedalkraft erzeugt werden, um einem Fahrzeugführer die Rückmeldung zu geben, dass die Bremsanlage 1 nicht voll funktionsfähig ist. Trotzdem ermöglicht oder jedenfalls erleichtert eine solche Pedalkraft ein Dosieren der Bremsbetätigung.

Wegen der Kombination zweier verschiedener Betriebsbremssysteme 2, 3, nämlich dem hydraulischen Betriebsbremssystem 2 und dem elektromechanischen Betriebsbremssystem 3, kann die Bremsanlage 1 auch als Hybrid-Bremsanlage bezeichnet werden.

Aufgrund der Modifikation des Bremskraftverstärkers 6, die die Erzeugung einer Pedalkraft ermöglicht, die der Betätigungsrichtung des Hauptbremszylinders 4 entgegengerichtet ist, bildet der Bremskraftverstärker 6 zugleich einen Pedalsimulator, mit dem eine Pedalkraft erzeugt werden kann, auch wenn im Hauptbremszylinder 4 kein Druck herrscht.

## Patentansprüche

1. Bremsanlage für ein Kraftfahrzeug, umfassend ein hydraulisches Betriebsbremssystem (2) und ein weiteres Betriebsbremssystem (3), wobei das hydraulische Betriebsbremssystem (2) einen muskelkraftbetätigbaren Hauptbremszylinder (4) mit einem Bremskraftverstärker (6) und eine oder mehrere hydraulische Radbremsen (8), die an den Hauptbremszylinder (4) angeschlossen sind, aufweist, **dadurch gekennzeichnet, dass** der Bremskraftverstärker (6) als Pedalsimulator ausgebildet ist und eine Pedalkraft erzeugen kann, die einer Betätigungskraft entgegengerichtet ist.

2. Bremsanlage nach Anspruch **dadurch gekennzeichnet, dass** die Bremsanlage (1) ein elektromechanisches Betriebsbremssystem (3) mit elektromechanischen Radbremsen (20) als weiteres Betriebsbremssystem aufweist.

3. Bremsanlage nach Anspruch 2, **dadurch gekennzeichnet, dass** die elektromechanischen Radbremsen (20) des elektromechanischen Betriebsbremssystems (3) selbstverstärkend sind.

4. Bremsanlage nach Anspruch 1, **dadurch gekennzeichnet, dass** das hydraulische Betriebsbremssystem (2) einen elektromechanischen Bremskraftverstärker (6) aufweist.

5. Verfahren zur Steuerung einer Bremsanlage (1) für ein Kraftfahrzeug, umfassend ein hydraulisches Betriebsbremssystem (2) und ein weiteres Betriebsbremssystem (3), wobei das hydraulische Betriebsbremssystem (2) einen muskelkraftbetätigbaren Hauptbremszylinder (4) mit einem Bremskraftverstärker (6) und eine oder mehrere hydraulische Radbremsen (8), die an den Hauptbremszylinder (4) angeschlossen sind, aufweist, **dadurch gekennzeichnet, dass** mit dem Bremskraftverstärker (6) eine Pedalkraft erzeugt wird, die einer Betätigungskraft entgegengerichtet ist, wenn bei einem Betätigungsweg nicht die übliche Betätigungskraft erreicht wird.

6. Verfahren nach Anspruch 5, **dadurch gekennzeichnet, dass** bein Betätigen der Bremse die übliche Betätigungskraft durch Erzeugen einer Pedalkraft mittels des Bremskraftverstärkers (6) erreicht wird.

## Claims

1. Braking system for a motor vehicle, comprising a hydraulic service brake system (2) and a further service brake system (3), the hydraulic service brake system (2) having a brake master cylinder (4) actuable by muscular force, with a brake booster (6), and one or more hydraulic wheel brakes (8) which are connected to the brake master cylinder (4), **characterized in that** the brake booster (6) is designed as a pedal simulator and can generate a pedal force which is directed opposite to an actuating force.

2. Braking system according to Claim 1, **characterized in that** the braking system (1) has an electromechanical service brake system (3) with electromechanical wheel brakes (20) as further service brake system.

3. Braking system according to Claim 2, **characterized in that** the electromechanical wheel brakes (20) of the electromechanical service brake system (3) are self-boosting.

4. Braking system according to Claim 1, **characterized in that** the hydraulic service brake system (2) has an electromechanical brake booster (6).

5. Method for controlling a braking system (1) for a motor vehicle, comprising a hydraulic service brake system (2) and a further service brake system (3), the hydraulic service brake system (2) having a brake master cylinder (4) actuable by muscular force, with a brake booster (6), and one or more hydraulic wheel brakes (8) which are connected to the brake master cylinder (4), **characterized in that**, by means of the brake booster (6), a pedal force is generated which is directed opposite to an actuating force when the customary actuating force is not achieved during an actuating travel.

6. Method according to Claim 5, **characterized in that**, when the brake is actuated, the customary actuating force is achieved by the generation of a pedal force by means of the brake booster (6).

## Revendications

1. Installation de freinage pour un véhicule automobile, comprenant un système de frein de service hydraulique (2) et un autre système de frein de service (3), le système de frein de service hydraulique (2) présentant un cylindre de frein principal (4) pouvant être actionné par une force musculaire avec un amplificateur de force de freinage (6) et un ou plusieurs freins de roue hydrauliques (8) qui sont raccordés au cylindre de frein principal (4), **caractérisée en ce que** l'amplificateur de force de freinage (6) est réalisé sous forme de simulateur de pédale et peut produire une force de pédale qui est opposée à une force d'actionnement.

2. Installation de freinage selon la revendication 1, **caractérisée en ce que** l'installation de freinage (1) présente un système de frein de service électromécanique (3) avec des freins de roue (20) électromécaniques en tant qu'autre système de frein de service.

3. Installation de freinage selon la revendication 2, **caractérisée en ce que** les freins de roue électromécaniques (20) du système de frein de service électromécanique (3) sont à auto-amplification.

4. Installation de freinage selon la revendication 1, **caractérisée en ce que** le système de frein de service hydraulique (2) présente un amplificateur de force de freinage (6) électromécanique.

5. Procédé de commande d'une installation de freinage (1) pour un véhicule automobile, comprenant un système de frein de service hydraulique (2) et un autre système de frein de service (3), le système de frein de service hydraulique (2) présentant un cylindre de frein principal (4) pouvant être actionné par une force musculaire avec un amplificateur de force de freinage (6) et un ou plusieurs freins de roue hydrauliques (8) qui sont raccordés au cylindre de frein principal (4), **caractérisé en ce qu'**une force de pédale est produite avec l'amplificateur de force de freinage (6), laquelle est opposée à une force d'actionnement lorsque la force d'actionnement usuelle n'est pas atteinte sur une course d'actionnement.

6. Procédé selon la revendication 5, **caractérisé en ce que** lors de l'actionnement du frein, la force d'actionnement usuelle est atteinte en produisant une force de pédale au moyen de l'amplificateur de force de freinage (6).
